# EUROPEAN PATENT SPECIFICATION

(11) **EP 1 722 294 B1**
(45) Date of publication and mention of the grant of the patent: **23.06.2010**
(21) Application number: 05252712.4
(22) Date of filing: 29.04.2005
(51) Int. Cl.: G06F 3/023

(54) **Method for generating text in a handheld electronic device and a handheld electronic device incorporating the same**
Tragbares Gerät mit Texterzeugungsverfahren
Dispositif portatif comprenant un procédé de génération de texte

(43) Date of publication of application: 15.11.2006
(73) Proprietor: Research In Motion Limited, Waterloo, Ontario N2L 3W8 (CA)
(72) Inventor: Fux, Vadim, Waterloo, Ontario N2K 3P5 (CA); Griffin, Jason, Kitchener, Ontario N2P 2L3 (CA)
(74) Representative: Roberts, Gwilym Vaughan

(56) References cited:
- EP-A2- 1 035 712
- WO-A-98/33111
- US-A1- 2004 156 562

## Description

### BACKGROUND

### Technical Field

Aspects of the invention relate to generating text in a handheld electronic device and to expediting the process, such as for example, where the handheld electronic device receives text from sources external to the device.

### Background Information

Generating text in a handheld electronic device examples of which include, for instance, personal data assistants (PDA's), handheld computers, two-way pagers, cellular telephones, text messaging devices, and the like, has become a complex process. This is due at least partially to the trend to make these handheld electronic devices smaller and lighter in weight. A limitation in making them smaller has been the physical size of keyboard if the keys are to be actuated directly by human fingers. Generally, there have been two approaches to solving this problem. One is to adapt the ten digit keypad indigenous to mobile phones for text input. This requires each key to support input of multiple characters. The second approach seeks to shrink the traditional full keyboard, such as the "qwerty" keyboard by doubling up characters to reduce the number of keys. In both cases, the input generated by actuation of a key representing multiple characters is ambiguous. Various schemes have been devised to interpret inputs from these multi-character keys. Some schemes require actuation of the key a specific number of times to identify the desired character. Others use software to progressively narrow the possible combinations of letters that can be intended by a specified sequence of key strokes. This latter approach uses multiple lists that can contain, for instance, generic words, application specific words, learned words and the like.

PCT Publication No. WO98/33111 relates generally to reduced keyboard systems, and more specifically to reduced keyboard systems using word-level disambiguation to resolve ambiguous keystrokes. Among vocabulary modules contained in the reduced keyboard disambiguating system is a custom vocabulary module. Words entered using the unambiguous spelling methods are automatically stored by the disambiguating system in a temporary vocabulary module. The words stored in the temporary vocabulary module will thereafter be automatically displayed in the selection list when the user enters the shorter sequence of single (ambiguous) keys for these words. When the user finishes editing the current text object being generated (e.g. closes a word processing document or accepts a text field entry), all of the words in the temporary dictionary that are still present in the document are added to the "permanent" custom vocabulary module.

An object of aspects of the invention is to facilitate generating text in a handheld electronic device. In another sense, an object is to assist the generation of text by processes that utilize lists of words, ideograms and the like by gathering new language objects from sources of text external to the handheld electronic device.

### SUMMARY

The present invention proposes to achieve the aforementioned objectives by means of a method and apparatus as defined by the appended claims.

### BRIEF DESCRIPTION OF THE DRAWINGS

Figure 1 is a front view of an exemplary handheld electronic device incorporating aspects of the invention.
Figure 2 is a functional diagram in block form illustrating aspects of the invention.
Figure 3 is a flow chart illustrating operation of aspects of the invention.
Figure 4 is a flow chart illustrating operation of aspects of the invention.

### DESCRIPTION

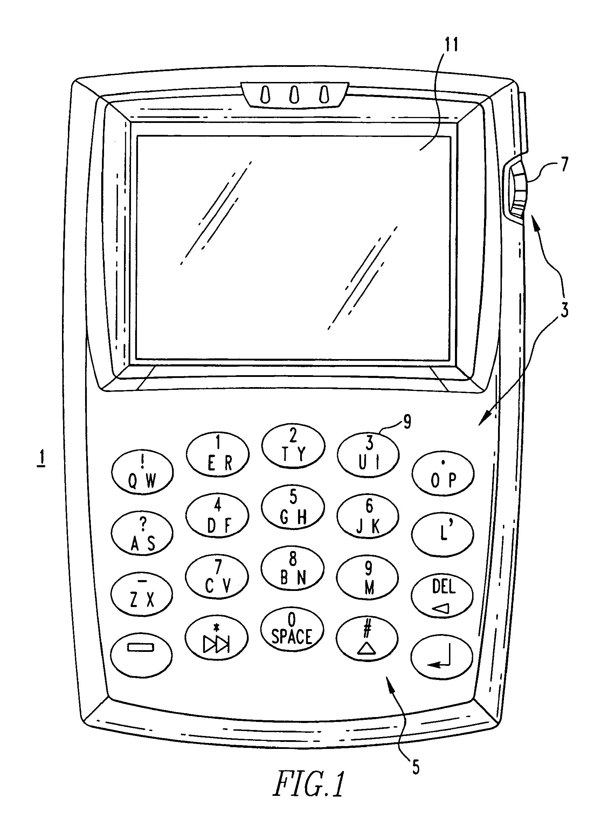

Figure 1 illustrates a wireless handheld electronic device 1, which is but one type of handheld electronic device to which aspects of the invention can be applied. The exemplary handheld electronic device 1 includes an input device 3 in the form of a keyboard 5 and a thumbwheel 7 that are used to control the functions of the handheld electronic device 1 and to generate text and other inputs. The keyboard 5 constitutes a reduced "qwerty" keyboard in which most of the keys 9 are used to input two letters of the alphabet. Thus, initially the input generated by depressing one of these keys is ambiguous in that it is undetermined as to which letter was intended. Various schemes have been devised for disambiguating the inputs generated by these keys 9 assigned multiple letters for input. The particular scheme used is not relevant to aspects of the invention as long as one or more linguistic lists are used in the process. The input provided through the keyboard 5 and thumbwheel 7 are displayed on a display 11 as is well known.

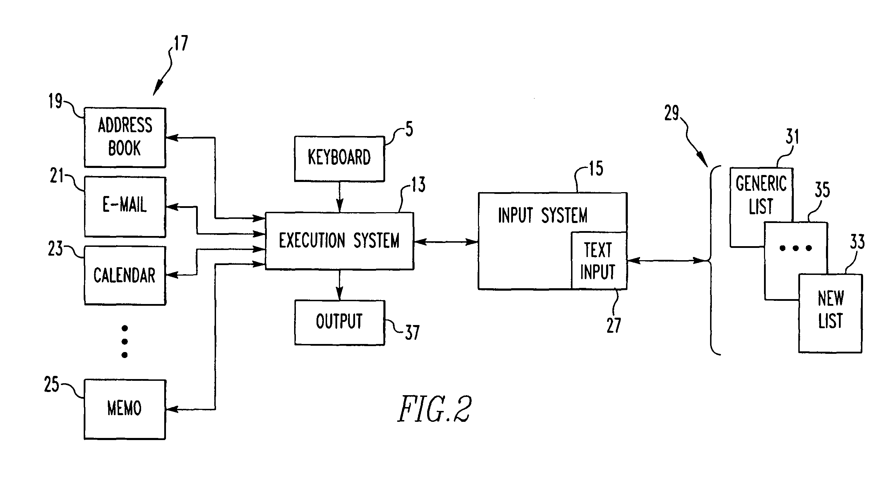

Turning to Figure 2, the input device 3 provides keystroke inputs to an execution system 13 that may be an operating system, a Java virtual machine, a run time environment or the like. The handheld electronic device 1 implements a plurality of applications 17. These applications can include an address book 19, e-mail 21, a calendar 23, a memo 25, and additional applications such as, for example, spell check and a phone application. Generally these applications 17 require text input that is implemented by a text input process 27, which forms part of an input system 15.

Various types of text input processes 27 can be used that employ lists 29 to facilitate the generation of text. For example, in the exemplary handheld electronic device where the reduced "qwerty" keyboard produces ambiguous inputs, the text input process 27 utilizes software to progressively narrow the possible combination of letters that could be intended by a specified sequence of keystrokes. Such "disambiguation" software is known. Typically, such systems employ a plurality of lists of language objects. By language objects it is meant in the example words and in some languages ideograms. The keystrokes input linguistic elements, which in the case of words, are characters or letters in the alphabet, and in the case of ideograms, strokes that make up the ideogram. The list of language objects can also include abbreviations, and text shortcuts, which are becoming common with the growing use of various kinds of text messaging. Text shortcuts embraces the cryptic and rather clever short representations of common messages, such as, for example, "CUL8R" for "see you later", "PXT" for "please explain that", "SS" for "so sorry", and the like. Lists that can be used by the exemplary disambiguation text input process 27 can include a generic list 31 and a new list 33. Additional lists 35 can include learned words and special word lists such as technical terms for biotechnology. Other types of text input processes 27, such as for example, prediction programs that anticipate a word intended by a user as it is typed in and thereby complete it, could also use word lists. Such a prediction program might be used with a full keyboard.

Known disambiguation programs can assign frequencies of use to the language objects, such as words, in the lists it uses to determine the language object intended by the user. Frequencies of use can be initially assigned based on statistics of common usage and can then be modified through actual usage. It is known for disambiguation programs to incorporate "learned" language objects such as words that were not in the initial lists, but were inserted by the user to drive the output to the intended new word. It is known to assign such learned words an initial frequency of use that is near the high end of the range of frequencies of use. This initial frequency of use is then modified through actual use as with the initially inserted words.

Aspects of the present invention are related to increasing the language objects available for use by the text input process 27. One source for such additional language objects is the e-mail application. Not only is it likely that new language objects contained in incoming e-mails would be used by the user to generate a reply or other e-mail responses, such new language objects could also be language objects that the user might want to use in generating other text inputs.

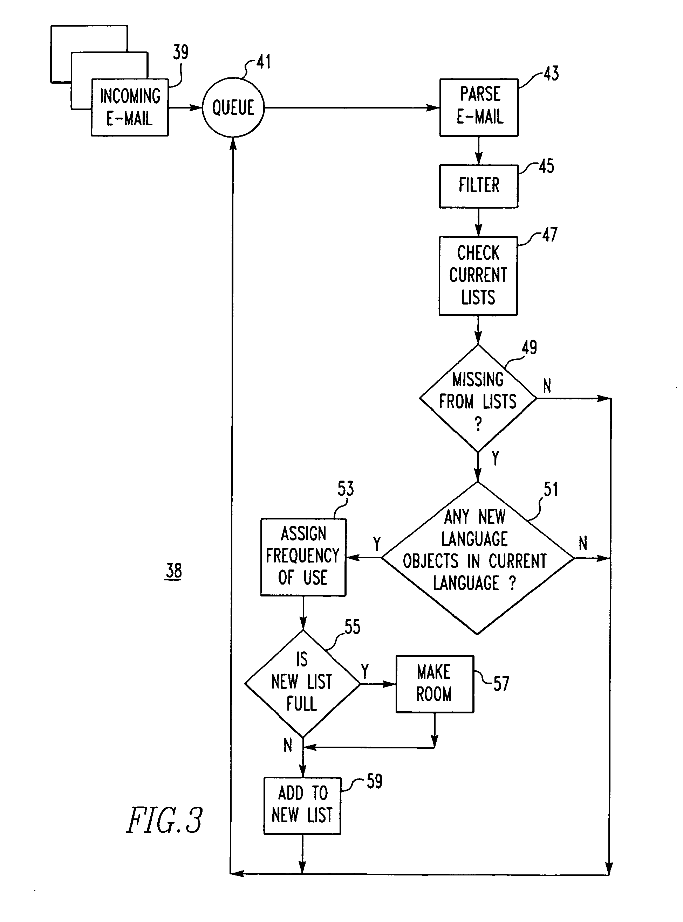

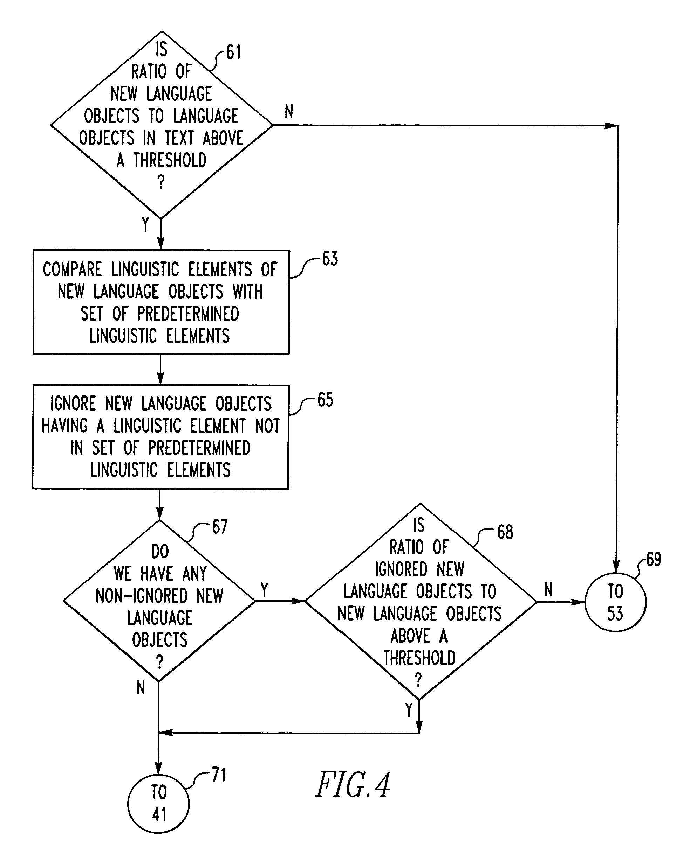

Figures 3 and 4 illustrate a flow chart of a routine 38 for harvesting new language objects from received e-mails. The incoming e-mails 39 are placed in a queue 41 for processing as permitted by the processing burden on the handheld electronic device 1. Processing begins with scanning the e-mail to parse the message into words (language objects) at 43. The parsed message is then filtered at 45 to remove unwanted components, such as numbers, dates, and the like. The language objects are then compared with the language objects in the current lists at 47. If it is determined at 49 that none of the language objects in the received text are missing from the current lists, such as if all of the language objects in the incoming e-mail message are already in one of the lists as determined at 47, then the routine 38 returns to the queue at 41. The text input process then initiates scanning of the next incoming e-mail in the queue as processing time becomes available.

However, if any of the language objects examined at 47 are determined at 49 to be missing from the current lists, meaning that they are new language objects, processing continues to 51 where it is determined whether any of the new language objects can be considered to be in the current language being employed by the user on the handheld electronic device 1 to input text. An example of the processing at 51 is described in greater detail in Figure 4 and below. If it is determined at 51 that no new language objects are in the current language, all of the new language objects are ignored, and the routine returns to the queue at 41. If, however, it is determined at 51 that a new language object is in the current language, each such new language object in the current language is assigned a frequency of use at 53. This assigned frequency of use will typically be in the high range of the frequencies of use, for the example, at about the top one third. These new words are placed in the new list 33. However, such a list will have a certain finite capacity, such that over time the new list can become full, as determined at 55. If such is the case, room must be made for this latest entry. Thus, at 57, room is made in the new list by removing one of the earlier entries. In the exemplary embodiment, where the new words are assigned a selected high initial frequency of use, and that frequency of use diminishes through operation of the disambiguation routine of the text input process, the word with the lowest frequency of use can be removed from the new list to make room for the latest new word. Alternatively, the stored new language object having a time stamp that is oldest can be removed. Accordingly, this latest new word is added to the new list at 59 and the routine returns to the queue at 41.

An exemplary language analysis procedure, such as is performed at 51, is depicted in detail in Figure 4. It is first determined whether the ratio of new language objects in at least a segment of the text to the total number of language objects in the segment exceeds a predetermined threshold. For instance, if an analysis were performed on the text on a line-by-line basis, the routine 38 would determine at 61 whether the quantity of new language objects in any line of text is, for example, ten percent (10%) or more of the quantity of language objects in the line of text. Any appropriate threshold may be employed. Also, segments of the text other than lines may be analyzed, or the entire text message can be analyzed as a whole. The size of the segment may be determined based upon the quantity of text in the message and/or upon other factors. If it is determined at 61 that the threshold has not been met, the new language objects in the text are accepted as being in the current language, and processing continues onward to 53, as is indicated at the numeral 69 in Figure 4.

On the other hand, continuing the example, if it is determined at 61 that in any line or other segment of text the threshold is exceeded, processing continues at 63 where the linguistic elements in all of the new language objects in the text are compared with a set of predetermined linguistic elements. A determination of the ratio of new language objects to language objects and the set of predetermined linguistic elements are non-limiting examples of specified characteristics that may be at least partially indicative of or particular to one or more predetermined languages.

If, for example, the current language is English, an exemplary set of predetermined linguistic elements indicative of the English language might include, for instance, the twenty-six Latin letters, both upper and lower case, symbols such as an ampersand, asterisk, exclamation point, question mark, and pound sign, and certain predetermined diacritics. If a new language object has a linguistic element other than the linguistic elements in the set of predetermined linguistic elements particular to the current language, the new language object is considered to be in a language other than the current language. If the English language is the current language used on the handheld electronic device 1, such as if the language objects stored in the lists 29 are generally in the English language, the routine 38 can identify and ignore non-English words.

If any new language objects are identified at 63 as having a linguistic element not in the set of predetermined linguistic elements, such new language objects are ignored, as at 65. The routine 38 then determines at 67 whether any non-ignored new language objects exist in the text. If yes, the routine 38 then ascertains at 68 whether a ratio of the ignored new language objects in the text to the new language objects in the text exceeds another threshold, for example fifty percent (50%). Any appropriate threshold may be applied. For instance, if the routine 38 determines at 68 that fifty percent or more of the new language objects were ignored at 65, processing returns to the queue at 41, as is indicated at the numeral 71 in Figure 4. This can provide an additional safeguard against adding undesirable language objects to the new list 33. On the other hand, if the routine 38 determines at 68 that fewer than fifty percent of the new language objects were ignored at 65, processing continues at 53, as is indicated in Figure 4 at the numeral 69, where the non-ignored new language objects can be added to the new list 33.

If it is determined at 67 that no non-ignored new language objects exist in the text, processing returns to the queue at 41 as is indicated in Figure 4 at the numeral 71. It is understood that other language analysis methodologies may be employed.

The above process not only searches for new words in a received e-mail but also for new abbreviations and new text shortcuts, or for ideograms if the language uses ideograms. In addition to scanning e-mails for new words, other text received from sources outside the handheld electronic device can also be scanned for new words. This can include gleaning new language objects from instant messages, SMS (short message service), MMS (multimedia service), and the like.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended.

## Claims

1. A method of entering text into a handheld electronic device (1) having at least one application (17) for receiving text from sources external to the handheld electronic device (1) and a text input process (27) that accesses at least one of a number of lists (29) of stored language objects to facilitate generation of text, and wherein language objects are formed of one or more linguistic elements, the method comprising:
processing received text received from an external source comprising scanning the received text for any new language objects not in any of said lists (29) of stored language objects;
determining whether any of the new language objects includes a linguistic element other than a linguistic element in a set of predetermined linguistic elements particular to a current language used on the handheld electronic device;
ignoring any new language objects which include a linguistic element other than a linguistic element in a set of predetermined linguistic elements particular to said language; and
adding any non-ignored new language objects to the at least one of said lists (29) of stored language objects for use by the text input process (27) in generating text.

2. The method of claim 1 further comprising making as at least a portion of said determination whether any of the new language objects can be considered to be objects not in a language currently being employed in the text input process, a determination that a ratio of the quantity of new language objects in a segment of text to the quantity of language objects in the segment of text does not exceed a predetermined threshold.

3. The method of claim 1 wherein the at least one application (17) for receiving text from a source external to the handheld electronic device (1) comprises an e-mail application (21) and the received text comprises received e-mail messages.

4. The method of claim 1 wherein the handheld electronic device (1) comprises input keys (9) at least some of which input multiple linguistic elements used by the text input process (27) to generate the language objects, and wherein the text input process (27) determines from a sequence of inputs from the input keys (9) an intended language object, and the at least one of a number of lists (29) of stored language units comprises a first list (31) containing language objects and a new list (33) in which the new language objects are stored, the text input process (27) having a preference rule for taking language objects from the first list (31) and the new list (33) to generate text.

5. The method of claim 4 wherein the first list (31) has a frequency of use associated with each language object stored in the first list (31), the text input process (27) associates a frequency of use with each of the new language objects stored in the new list (33) and the preference rule uses the frequencies of use of the language objects in the first list (31) and the new list (33) in selecting language objects to use in generating the text.

6. The method of claim 1 further comprising making as at least a portion of said determination whether any of the new language objects can be considered to be not in a language currently being employed in the text input process, a determination that a ratio of the quantity of new language objects in a segment of text to the quantity of language objects in the segment of text exceeds a predetermined threshold and, responsive thereto, comparing the new language objects with a set of predetermined linguistic elements that are at least partially indicative of the current language.

7. The method of claim 6 further comprising determining that at least one new language object has a linguistic element other than the linguistic elements within the set of predetermined linguistic elements and, responsive thereto, initiating the ignoring of the at least one new language object.

8. The method of claim 7 further comprising determining that a ratio of the quantity of new language objects in the segment of text to the quantity of language objects in the segment of text does not exceed another predetermined threshold and, responsive thereto, initiating said adding of any non-ignored new language objects to the at least one list of stored language objects.

9. A handheld electronic device (1) comprising:
a plurality of applications (17) that utilize text and at least one of which application (17) receives text from a source external to the handheld electronic device (1);
an input device (3) through which a user inputs linguistic elements for generating text, wherein language objects are formed of one or more linguistic elements;
an input system comprising:
a first list (31) storing language objects;
a new list (33) storing new language objects; and
a text input processor (27) comprising processing means selecting from received text from the source external to the handheld electronic device (1) new language objects not in the first list (31) or the new list (33), means determining whether any of the new language objects includes a linguistic element other than a linguistic element in a set of predetermined linguistic elements particular to a current language used on the handheld electronic device, ignoring any new language objects which include a linguistic element other than a linguistic element in a set of predetermined linguistic elements particular to in said language, and adding any non-ignored language objects to the new list (33), and means using selected language objects stored in the first list (31) and the new list (33) to generate the desired text from the linguistic elements input through the user interface; and
output means presenting the desired text to the user.

10. The handheld electronic device (1) of claim 9 wherein the processing means further comprises means making as at least a portion of said determination whether any of the new language objects can be considered to be objects not in a language currently being employed in the text input process a determination that a ratio of the quantity of new language objects in a segment of text to the quantity of language objects in the segment of text does not exceed a predetermined threshold.

11. The handheld electronic device (1) of claim 9 wherein the processing means further comprises means making as at least a portion of said determination whether any of the new language objects can be considered to be objects not in a language currently being employed in a text input process a determination that a ratio of the quantity of new language objects in a segment of text to the quantity of language objects in the segment of text exceeds a predetermined threshold and, responsive thereto; comparing the new language objects with the set of predetermined linguistic elements that are at least partially indicative of the language currently being employed.

12. The handheld electronic device (1) of claim 11 wherein the processing means further comprises means determining that at least one new language object has a linguistic element other than the linguistic element within the set of predetermined linguistic elements and, responsive thereto, initiating the ignoring of the at least one new language object.

13. The handheld electronic device of claim 12 wherein the processing means further comprises means for determining that a ratio of the quantity of ignored new language objects in the segment of text to the quantity of language objects in the segment of text does not exceed another predetermined threshold and, responsive thereto, initiating said adding of any non-ignored new language objects to the at least one list of stored language objects.

## Patentansprüche

1. Verfahren zur Eingabe von Text in eine handgehaltene elektronische Vorrichtung (1), die zumindest eine Anwendung (17) hat zum Empfangen von Text von Quellen, die extern sind zu der handgehaltenen elektronischen Vorrichtung (1), und ein Texteingabeverfahren (27), das auf zumindest eine aus einer Anzahl von Listen (29) von gespeicherten Sprachobjekte zugreift, um eine Erzeugung von Text zu erleichtern, und
wobei Sprachobjekte aus einem oder mehreren linguistischen Elementen gebildet werden, wobei das Verfahren aufweist:
Verarbeiten eines empfangenen Texts, der von einer externen Quelle empfangen wird, das aufweist ein Abtasten des empfangenen Texts nach neuen Sprachobjekten, die nicht in einer der Listen (29) von gespeicherten Sprachobjekten sind;
Bestimmen, ob eines der neuen Sprachobjekte ein linguistisches Element umfasst, das verschieden ist von einem linguistischen Element in einem Satz von vorgegebenen linguistischen Elementen, die für eine aktuelle Sprache speziell sind, die auf der handgehaltenen elektronischen Vorrichtung benutzt wird;
Ignorieren von neuen Sprachobjekten, die ein linguistisches Element umfassen, das verschieden ist von einem linguistischen Element in einem Satz von vorgegebenen linguistischen Elementen, die für die Sprache speziell sind; und
Hinzufügen von nicht-ignorierten neuen Sprachobjekten zu der zumindest einen der Listen (29) von gespeicherten Sprachobjekten zur Verwendung durch das Texteingabeverfahren (27) bei einer Erzeugung von Text.

2. Verfahren gemäß Anspruch 1, das weiter aufweist Bestimmen, als zumindest einen Teil der Bestimmung, ob einige der neuen Sprachobjekte als Objekte betrachtet werden können, die nicht in einer Sprache sind, die aktuell in dem Texteingabeverfahren eingesetzt ist, dass ein Verhältnis der Quantität von neuen Sprachobjekten in einem Segment von Text zu der Quantität von Sprachobjekten in dem Segment von Text keine vorgegebene Schwelle übersteigt.

3. Verfahren gemäß Anspruch 1, wobei die zumindest eine Anwendung (17) zum Empfangen von Text von einer Quelle, die extern zu der handgehaltenen elektronischen Vorrichtung (1) ist, eine Email-Anwendung (21) aufweist und der empfangene Text empfangene Email-Nachrichten aufweist.

4. Verfahren gemäß Anspruch 1, wobei die handgehaltene elektronische Vorrichtung (1) Eingabetasten (9) aufweist, von denen zumindest einige mehrere linguistische Elemente eingeben, die von dem Texteingabeverfahren (27) verwendet werden, um die Sprachobjekte zu erzeugen, und wobei das Texteingabeverfahren (27) aus einer Sequenz von Eingaben von den Eingabetasten ein vorgesehenes Sprachobjekt bestimmt, und wobei die zumindest eine aus einer Anzahl von Listen (29) von gespeicherten Spracheinheiten eine erste Liste (31) aufweist, die Sprachobjekte aufweist, und eine neue Liste (33), in der die neuen Sprachobjekte gespeichert werden, wobei das Texteingabeverfahren (27) eine Präferenzregel hat zum Verwenden von Sprachobjekten aus der ersten Liste (31) und der neuen Liste (33) zum Erzeugen von Text.

5. Verfahren gemäß Anspruch 4, wobei die erste Liste (31) eine Verwendungshäufigkeit hat, die zu jedem Sprachobjekt gehört, das in der ersten Liste (31) gespeichert ist, wobei das Texteingabeverfahren (27) eine Verwendungshäufigkeit jedem der neuen Sprachobjekte zuordnet, die in der neuen Liste (33) gespeichert sind, und die Präferenzregel die Verwendungshäufigkeiten der Sprachobjekte in der ersten Liste (31) und der neuen Liste (33) verwendet bei der Auswahl von Sprachobjekten zur Verwendung bei der Erzeugung des Texts.

6. Verfahren gemäß Anspruch 1, das weiter aufweist Bestimmen, als zumindest einen Teil der Bestimmung, ob einige der neuen Sprachobjekte betrachtet werden können als nicht in einer Sprache, die aktuell in dem Texteingabeverfahren eingesetzt ist, dass ein Verhältnis der Quantität von neuen Sprachobjekten in einem Segment von Text zu der Quantität von Sprachobjekten in dem Segment von Text eine vorgegebene Schwelle übersteigt, und in Reaktion darauf, Vergleichen der neuen Sprachobjekte mit einem Satz von vorgegebenen linguistischen Elementen, die zumindest teilweise die aktuelle Sprache anzeigen.

7. Verfahren gemäß Anspruch 6, das weiter aufweist Bestimmen, dass zumindest ein neues Sprachobjekt ein linguistisches Element hat, das verschieden ist von den linguistischen Elementen in dem Satz von vorgegebenen linguistischen Elementen, und in Reaktion darauf Initiieren des Ignorierens des zumindest einen neuen Sprachobjekts.

8. Verfahren gemäß Anspruch 7, das weiter aufweist Bestimmen, dass ein Verhältnis der Quantität von neuen Sprachobjekten in dem Segment von Text zu der Quantität von Sprachobjekten in dem Segment von Text keine andere vorgegebene Schwelle übersteigt und, in Reaktion darauf, Initiieren des Hinzufügens von nicht-ignorierten neuen Sprachobjekten zu der zumindest einen Liste von gespeicherten Sprachobjekten.

9. Handgehaltene bzw. tragbare elektronische Vorrichtung (1), die aufweist:
eine Vielzahl von Anwendungen (17), die Text verwenden, und wobei zumindest eine der Anwendungen (17) Text von einer Quelle empfängt, die extern zu der handgehaltenen elektronischen Vorrichtung (1) ist;
eine Eingabevorrichtung (3), über die ein Benutzer linguistische Elemente eingibt zum Erzeugen von Text, wobei Sprachobjekte aus einem oder mehreren linguistischen Elementen gebildet sind;
ein Eingabesystem, das aufweist:
eine erste Liste (31) zum Speichern von Sprachobjekten;
eine neue Liste (33) zum Speichern von neuen Sprachobjekten; und
einen Texteingabeprozessor (27), der Verarbeitungsmittel aufweist zum Auswählen neuer Sprachobjekte, die nicht in der ersten Liste (31) oder der neuen Liste (33) sind, aus empfangene Text von der Quelle, die extern zu der handgehaltenen elektronischen Vorrichtung (1) ist, Mittel zum Bestimmen, ob eines der neuen Sprachobjekte ein linguistisches Element umfasst, das verschieden ist von einem linguistischen Element in einem Satz von vorgegebenen linguistischen Elementen, die für eine aktuelle Sprache speziell sind, die auf der handgehaltenen elektronischen Vorrichtung benutzt wird, Ignorieren von neuen Sprachobjekten, die ein linguistisches Element umfassen, das verschieden ist von einem linguistischen Element in einem Satz von vorgegebenen linguistischen Elementen, die für die Sprache speziell sind, und Hinzufügen von nicht-ignorierten Sprachobjekten zu der neuen Liste (33), und Mittel zur Verwendung ausgewählter Sprachobjekte, die in der ersten Liste (31) und
der neuen Liste (33) gespeichert sind, um den gewünschten Text aus den linguistischen Elementen zu erzeugen, die über die Benutzerschnittstelle eingegeben werden; und
Ausgabemittel zum Präsentieren des gewünschten Texts dem Benutzer.

10. Handgehaltene elektronische Vorrichtung (1) gemäß Anspruch 9, wobei das Verarbeitungsmittel weiter Mittel aufweist zum Bestimmen, als zumindest einen Teil der Bestimmung, ob einige der neuen Sprachobjekte als Objekte betrachtet werden können, die nicht in einer Sprache sind, die aktuell in dem Texteingabeverfahren eingesetzt ist, dass ein Verhältnis der Quantität von neuen Sprachobjekten in einem Segment von Text zu der Quantität von Sprachobjekten in dem Segment von Text keine vorgegebene Schwelle übersteigt.

11. Handgehaltene elektronische Vorrichtung (1) gemäß Anspruch 9, wobei das Verarbeitungsmittel weiter Mittel aufweist zum Bestimmen, als zumindest einen Teil der Bestimmung, ob einige der neuen Sprachobjekte als Objekte betrachtet werden können, die nicht in einer Sprache sind, die aktuell in dem Texteingabeverfahren eingesetzt ist, dass ein Verhältnis der Quantität von neuen Sprachobjekten in einem Segment von Text zu der Quantität von Sprachobjekten in dem Segment von Text eine vorgegebene Schwelle übersteigt, und, in Reaktion darauf, Vergleichen der neuen Sprachobjekte mit dem Satz von vorgegebenen linguistischen Elementen, die zumindest teilweise die Sprache anzeigen, die aktuell eingesetzt wird.

12. Handgehaltene elektronische Vorrichtung (1) gemäß Anspruch 11, wobei das Verarbeitungsmittel weiter Mittel aufweist zum Bestimmen, dass zumindest ein neues Sprachobjekt ein linguistisches Element hat, das verschieden ist von dem linguistischen Element in dem Satz von vorgegebenen linguistischen Elementen, und, in Reaktion darauf, Initiieren des Ignorierens des zumindest einen neuen Sprachobjekts.

13. Handgehaltene elektronische Vorrichtung gemäß Anspruch 12, wobei das Verarbeitungsmittel weiter Mittel aufweist zum Bestimmen, dass ein Verhältnis der Quantität von ignorierten neuen Sprachobjekten in dem Segment von Text zu der Quantität von Sprachobjekten in dem Segment von Text keine andere vorgegebene Schwelle übersteigt und, in Reaktion darauf, Initiieren des Hinzufügens von nicht-ignorierten neuen Sprachobjekten zu der zumindest einen Liste von gespeicherten Sprachobjekten.

## Revendications

1. Procédé d'entrée de texte dans un dispositif électronique portatif (1) ayant au moins une application (17) pour recevoir un texte de sources externes au dispositif électronique portatif (1) et un processus (27) d'entrée de texte qui a accès à au moins l'une parmi un nombre de listes (29) d'objets de langage stockés pour faciliter la génération de texte, et où des objets de langage sont formés d'un ou de plusieurs éléments linguistiques, le procédé comprenant le fait de :
traiter un texte reçu qui est reçu d'une source externe comprenant le fait de balayer le texte reçu à la recherche de tout nouvel objet de langage qui ne se trouve pas dans une liste quelconque desdites listes (29) d'objets de langage stockés ;
déterminer si un objet quelconque des nouveaux objets de langage comporte un élément linguistique autre qu'un élément linguistique dans un ensemble d'éléments linguistiques prédéterminés propres à un langage courant utilisé sur le dispositif électronique portatif ;
ignorer tout nouvel objet de langage qui comporte un élément linguistique autre qu'un élément linguistique dans un ensemble d'éléments linguistiques prédéterminés propres audit langage ; et
ajouter tout nouvel objet de langage non ignoré à l'au moins l'une desdites listes (29) d'objets de langage stockés à utiliser par le processus (27) d'entrée de texte pour la génération de texte.

2. Procédé de la revendication 1, comprenant en plus le fait de déterminer, en tant qu'au moins une partie de ladite détermination selon qu'un objet quelconque des nouveaux objets de langage peut être considéré comme étant un objet ne se trouvant pas dans un langage couramment employé dans le processus d'entrée de texte, qu'un rapport de la quantité de nouveaux objets de langage dans un segment de texte par la quantité d'objets de langage dans le segment de texte ne dépasse pas un seuil prédéterminé.

3. Procédé de la revendication 1, dans lequel l'au moins une application (17) destinée à recevoir du texte d'une source externe au dispositif électronique portatif (1) comprend une application (21) de courrier électronique et le texte reçu comprend des courriers électroniques reçus.

4. Procédé de la revendication 1, dans lequel le dispositif électronique portatif (1) comprend des touches d'entrée (9) dont au moins certaines rentrent de multiples éléments linguistiques utilisés par le processus (27) d'entrée de texte pour générer les objets de langage, et où le processus (27) d'entrée de texte détermine à partir d'une séquence d'entrées des touches d'entrée (9) un objet de langage voulu, et l'au moins l'une parmi un nombre de listes (29) d'unités de langage stockées comprend une première liste (31) contenant des objets de langage et une nouvelle liste (33) dans laquelle les nouveaux objets de langage sont stockés, le processus (27) d'entrée de texte ayant une règle de préférence pour prendre des objets de langage de la première liste (31) et de la nouvelle liste (33) afin de générer du texte.

5. Procédé de la revendication 4, dans lequel la première liste (31) a une fréquence d'utilisation associée à chaque objet de langage stocké dans la première liste (31), le processus (27) d'entrée de texte associe une fréquence d'utilisation à chacun des nouveaux objets de langage stockés dans la nouvelle liste (33) et la règle de préférence utilise les fréquences d'utilisation des objets de langage dans la première liste (31) et la nouvelle liste (33) lors de la sélection d'objets de langage à utiliser dans la génération du texte.

6. Procédé de la revendication 1, comprenant en plus le fait de déterminer, en tant qu'au moins une partie de ladite détermination selon qu'un objet quelconque parmi les nouveaux objets de langage peut être considéré comme étant un objet ne se trouvant pas dans un langage couramment employé dans le processus d'entrée de texte, qu'un rapport de la quantité de nouveaux objets de langage dans un segment de texte par la quantité d'objets de langage dans le segment de texte dépasse un seuil prédéterminé, et en réponse à cela, comparer les nouveaux objets de langage à un ensemble d'éléments linguistiques prédéterminés qui indiquent au moins partiellement le langage courant.

7. Procédé de la revendication 6, comprenant en plus le fait de déterminer qu'un moins un nouvel objet de langage a un élément linguistique autre que les éléments linguistiques dans l'ensemble d'éléments linguistiques prédéterminés et, en réponse à cela, de commencer à ignorer l'au moins un nouvel objet de langage.

8. Procédé de la revendication 7 comprenant en plus le fait de déterminer qu'un rapport de la quantité de nouveaux objets de langage dans le segment de texte par la quantité d'objets de langage dans le segment de texte ne dépasse pas un autre seuil prédéterminé et, en réponse à cela, de commencer ledit ajout de tout nouvel objet de langage non ignoré à l'au moins une liste d'objets de langage stockés.

9. Dispositif électronique portatif (1) comprenant :
une pluralité d'applications (17) qui utilisent un texte et dont au moins une application (17) reçoit un texte d'une source externe au dispositif électronique portatif (1) ;
un dispositif d'entrée (3) à travers lequel un utilisateur introduit des éléments linguistiques pour générer du texte, où des objets de langage sont formés d'un ou de plusieurs éléments linguistiques ;
un système d'entrée comprenant :
une première liste (31) stockant des objets de langage ;
une nouvelle liste (33) stockant de nouveaux objets de langage ; et
un processeur (27) d'entrée de texte comprenant un moyen de traitement sélectionnant à partir d'un texte reçu de la source externe au dispositif électronique portatif (1) de nouveaux objets de langage ne se trouvant pas dans la première liste (31) ou dans la nouvelle liste (33), un moyen déterminant si un objet quelconque des nouveaux objet de langage comporte un élément linguistique autre qu'un élément linguistique dans un ensemble d'éléments linguistiques prédéterminés propres à un langage courant utilisé sur le dispositif électronique portatif, ignorant tout nouveau objet de langage qui comporte un élément linguistique autre qu'un élément linguistique dans un ensemble d'éléments linguistiques prédéterminés propres audit langage, et ajoutant tout objet de langage non ignoré à la nouvelle liste (33), et un moyen utilisant des objets de langage sélectionnés stockés dans la première liste (31) et dans la nouvelle liste (33) pour générer le texte souhaité des éléments linguistiques introduits à travers l'interface utilisateur ; et
un moyen de sortie présentant le texte souhaité à l'utilisateur.

10. Dispositif électronique portatif (1) de la revendication 9, dans lequel le moyen de traitement comprend en plus un moyen déterminant, en tant qu'au moins une partie de ladite détermination selon qu'un objet quelconque des nouveaux objets de langage peut être considéré comme étant un objet ne se trouvant pas dans un langage couramment utilisé dans le processus d'entrée de texte, qu'un rapport de la quantité de nouveaux objets de langage dans un segment de texte par la quantité d'objets de langage dans le segment de texte ne dépasse pas un seuil prédéterminé.

11. Dispositif électronique portatif (1) de la revendication 9, dans lequel le moyen de traitement comprend en plus un moyen déterminant, en tant qu'au moins une partie de ladite détermination selon qu'un objet quelconque des nouveaux objets de langage peut être considéré comme étant un objet ne se trouvant pas dans un langage couramment utilisé dans le processus d'entrée de texte, qu'un rapport de la quantité de nouveaux objets de langage dans un segment de texte par la quantité d'objets de langage dans le segment de texte dépasse un seuil prédéterminé, et en réponse à cela, comparer les nouveaux objets de langage avec l'ensemble d'éléments linguistiques prédéterminés qui indiquent au moins partiellement le langage couramment utilisé.

12. Dispositif électronique portatif (1) de la revendication 11, dans lequel le moyen de traitement comprend en plus un moyen déterminant qu'au moins un nouvel objet de langage possède un élément linguistique autre que l'élément linguistique dans l'ensemble d'éléments linguistiques prédéterminés et, en réponse à cela, commence à ignorer l'au moins un nouvel objet de langage.

13. Dispositif électronique portatif (1) de la revendication 12, dans lequel le moyen de traitement comprend en plus un moyen destiné à déterminer qu'un rapport de la quantité de nouveaux objets de langage ignorés dans le segment de texte par la quantité d'objets de langage dans le segment de texte ne dépasse pas un autre seuil prédéterminé et, en réponse à cela, commencer ledit ajout de tout nouvel objet de langage non ignoré à l'au moins une liste d'objets de langage stockés.
